# FASCICULE DE BREVET EUROPEEN

(11) **EP 1 361 315 B1**
(45) Date de publication et mention de la délivrance du brevet: **04.06.2008**
(21) Numéro de dépôt: 03290815.4
(22) Date de dépôt: 01.04.2003
(51) Int. Cl.: E04B 1/80

(54) **Materiau rigide multicouche pour isolation thermique**
Formstabiles, mehrschichtiges Material zur Wärmeisolierung
Multilayered, rigid material for thermal insulation

(30) Priorité: 06.05.2002 FR 0205634
(43) Date de publication de la demande: 12.11.2003
(73) Titulaire: Alcatel Lucent, 75008 Paris (FR)
(72) Inventeur: Maignan, Michel, 31860 Pins Justaret (FR); Youssefi, Thierry, 31600 Labastidette (FR); Brevart, Bertrand, 31000 Toulouse (FR)
(74) Mandataire: Esselin, Sophie

(56) Documents cités:
- WO-A-99/04966
- DE-A- 3 527 061
- FR-A- 948 904
- GB-A- 2 316 651
- US-A- 4 061 812

## Description

Le domaine de l'invention est celle des structures thermiquement isolantes à hautes performances thermiques et mécaniques, notamment pour des applications spatiales.

Les rigueurs de lancement et de l'environnement spatial comprennent, entre autres, des fortes accélérations et vibrations, des extrêmes de température, la transition entre la pression atmosphérique et le vide spatial. Et chaque kilo coûte très cher au lancement.

Pour les éléments structuraux donc, on cherche des matériaux rigides et légers, avec une grande stabilité dimensionnelle donc une faible dilatation thermique, avec une bonne résistance à des déformations mécaniques éventuelles dues à des vibrations ou des accélérations, et un bon comportement dans le vide spatial (faible dégazage, et cetera).

Dans certains applications, une structure spatiale doit supporter et contribuer à maintenir une fort différentiel de température ; il faut donc un matériau thermiquement isolant. Un exemple d'application est la cryogénie, où le différentiel thermique à travers la structure peut être de l'ordre de quelques centaines de degrés.

Un matériau utilisé couramment pour des applications spatiales est le « nid d'abeille », aussi connu de l'homme de l'art par l'acronyme « nida ». Le nida ressemble effectivement à la structure élaborée à l'intérieur de la ruche par les abeilles - un réseau plan d'alvéoles sensiblement hexagonaux ayant des parois mitoyennes entre les alvéoles avoisinants.

Les structures en nida sont légères et peuvent être rendues très rigides par rapport à leur poids. Elles peuvent être rigidifiées par exemple par un laminage multicouches, éventuellement avec des « peaux » planes qui sont collées sur les tranches des parois des alvéoles, les fermant.

Pour rendre une telle structure isolante, il est connu d'améliorer l'isolation par une protection en couches isolantes, connues de l'homme de l'art par l'acronyme anglophone « MLI » pour « multi-layer insulation ».

La pose de la MLI est une opération manuelle délicate qui nécessite de multiples découpes. Il est difficile de poser de la MLI dans des parties cachées. De plus des rayons de courbures faibles dégradent ses qualités. Les découpes de la MLI, son report par velcro avec bâillements éventuels, les zones de fixations de la structure elle-même, sont des causes possibles de fuite thermique. La conductivité entre la structure et ses points de fixation est importante.

Avec ce procédé, les deux fonctions, rigidité et isolation, sont séparées.

Il est connu par le document US-A-5 230 941, un matériau isolant avec un nid d'abeille en papier, prévu pour des emballages iso thermiques d'alimentation pour entretenir la chaîne du froid lors du transport. Le nid d'abeille est pris en sandwich entre deux peaux de papier aluminisées. Selon l'enseignement de ce document, le nida a pour effet de réduire le transfert thermique à travers le matériau isolant en réduisant la convection entre les deux peaux. Cet effet est obtenu en immobilisant l'air emprisonné à l'intérieur des alvéoles les plus petits possibles.

Bien qu'ayant une forme analogue à celle des matériaux nida déjà connus dans le domaine spatial, le nida du document US-A-5 230 941 est totalement inadapté aux applications spatiales pour plusieurs raisons. D'abord la matière : du papier ou du carton ne sont pas des matériaux assez propres ni assez résistants pour des vols spatiaux. Ensuite parce que l'effet recherché provient de l'air emprisonné dans les alvéoles, alors que dans l'espace, il ne devrait plus y avoir de l'air. Et sans l'air à l'intérieur, l'enseignement de US-A-5 230 941 ne peut pas fonctionner.

Un matériau analogue est connu du DE-A-3 527 061. Il est réalisé sous vide. Il en résulte que les alvéoles sont vidées de leur gaz.

La présente invention a pour but de pallier les inconvénients des matériaux connus de l'art antérieur. A ces fins, l'invention propose un matériau rigide multicouche pour isolation thermique, notamment dans le vide, comprenant au moins une plaque de matériau en nid d'abeille isolant prise « en sandwich » entre deux peaux aluminisées ou dorées d'émissivité faible, caractérisé en ce que ledit matériau nid d'abeille comprend une pluralité d'alvéoles dont le diamètre (dans le plan de ladite plaque) est d'au moins deux fois plus grande que leur hauteur (perpendiculaire à ladite plaque).

Selon une réalisation préférée, les parois latéraux desdits alvéoles sont percées latéralement pour en assurer la vidange de l'air pendant la mise sous vide dudit matériaux.

Selon une variante, le matériau peut comprendre une pluralité de N plaques en nid d'abeille prises en sandwich entre au moins deux peaux aluminisées ou dorées.

Selon une réalisation préférée de cette dernière variante, les alvéoles des plaques adjacentes sont décalées latéralement de manière à minimiser les points de contact entre les parois des alvéoles d'une plaque et ceux de la plaque adjacente.

Selon une réalisation préférée, lesdites peaux aluminisées ou dorées sont réalisées en matériau structural isolant tel que verre-epoxy.,

Selon une autre réalisation préférée ledit matériau nid d'abeille est réalisé dans un matériau très isolant tel que PEI (polyéthérimide amorphe, commercialisé sous le nom ULTEM) ou NOMEX ® (Dupont Nemours).

L'invention propose aussi un procédé de fabrication par collage d'un matériau rigide multicouche selon l'une ou l'autre des variantes précédentes, dans lequel la colle est déposée uniquement sur les tranches des parois desdits alvéoles, caractérisé en ce qu'elle comprend au moins les étapes suivantes :
- Pose d'un film de colle sur la surface de ladite plaque de nid d'abeille ;
- Chauffage dudit film pour crever les alvéoles; ce qui engendra le rétrécissement de la colle sur la tranche desdits alvéoles ;
- Pressage des panneaux entre eux.

D'autres caractéristiques et avantages de l'invention apparaîtront lors de la description détaillée qui suit, avec ses dessins annexés, dont
- La figure 1, qui montre schématiquement et en perspective, un exemple d'un matériau rigide multicouche « en sandwich » selon l'invention ;
- La figure 2, qui montre schématiquement et en perspective, une vue éclatée du « sandwich» de la figure 1 ;
- La figure 3, qui montre en projection et en transparence, quelques alvéoles de deux couches adjacentes de matériau en nid d'abeille, décalées pour minimiser les échanges thermiques via conduction ;
- La figure 4, qui montre schématiquement et en perspective, un alvéole de nid d'abeille selon l'invention, percé pour en assurer le vidange pendant la mise sous vide du matériau.

Les mêmes repères désignent les mêmes éléments sur toutes les figures ; pour des raisons de clarté, l'échelle n'est pas toujours la même.

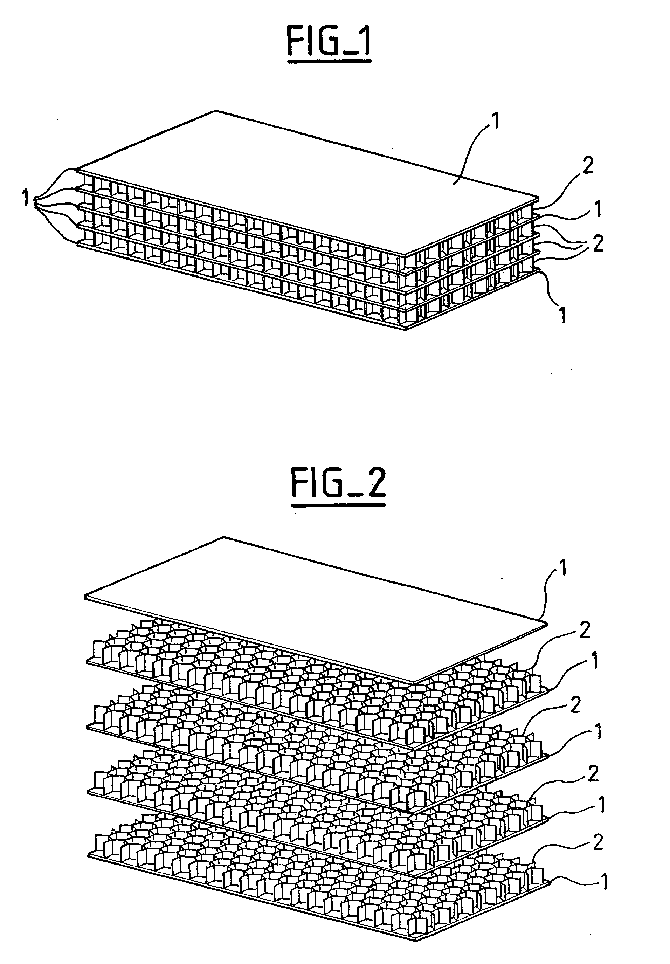

La figure 1 montre schématiquement et en perspective un exemple d'un matériau rigide multicouche selon l'invention. Le matériau consiste en un empilage « en sandwich » de couches en nid d'abeille (ou nida) (2) et des « peaux » (1). Selon l'exemple de la figure 1, ces couches sont alternées, N plaques de nida (2) alternées avec N+1 peaux (1) aluminisées ou dorées. Les peaux seront de préférence réalisées en matériau structural isolant, par exemple verre-epoxy, et recouvertes avec de l'or ou d'aluminium afin d'obtenir une faible émissivité et ainsi minimiser la transmission thermique par rayonnement entre couches successives, Etant donné la surface importante des peaux en regard.

Le nida sera choisi dans un matériau très isolant (PEI, NOMEX, ou semblable), afin d'obtenir une forte résistance à la conduction thermique. Nomex ® est un papier aramide (polyamide aromatique). Un fabricant de nida en Nomex ® est Euro-composite SA, d'Echternach, Luxembourg.

Les couches successives seront assemblées par exemple par collage. Il est important, afin de conserver les propriétés optiques (faible émmisivité) des peaux (1), de ne pas les salir avec de la colle. Il est donc préférable de ne poser de la colle que sur les tranches des parois des plaques nida (2). Un procédé original pour réaliser l'invention fait l'objet d'une revendication unique de procédé. Le procédé de l'invention comprend au moins les étapes suivantes :
- Pose d'un film de colle sur la surface de ladite plaque de nid d'abeille (2) ;
- Chauffage dudit film pour crever les alvéoles ; ce qui engendra le rétrécissement de la colle sur la tranche desdits alvéoles ;
- Pressage des panneaux entre eux.

La figure 2 montre schématiquement et en perspective, une vue éclaté du « sandwich » de la figure 1. Le sandwich multicouche peut comporter autant de planches nida que nécessaire pour l'utilisation envisagée. Augmenter le nombre N de planches augmente la rigidité et le pouvoir portant de la structure, ainsi que son pourvoir isolant. Dans l'exemple de la figure 2, on voit que pour assembler le sandwich, on peut procéder d'abord avec un premier collage de paires peau (1) - planche (2) de nida, de préférence selon les étapes mentionnées au paragraphe précédent. Ensuite le même procédé de collage est pratiqué sur l'autre face de la planche nida (2), et tout le sandwich est collé pour obtenir le matériau fini tel que montré sur la figure 1.

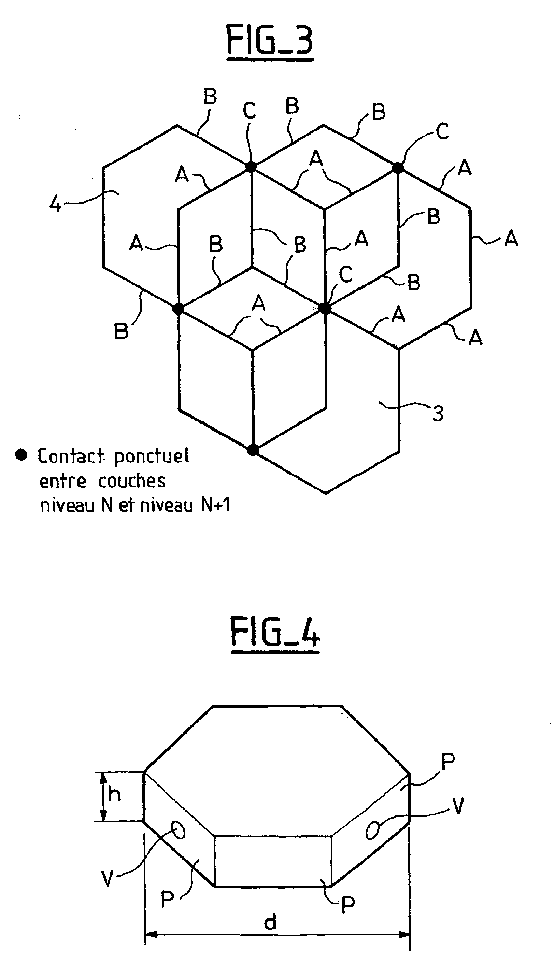

Selon une réalisation particulièrement avantageuse et telle que montrée sur la figure 3, les alvéoles d'une première planche de nida (3) sont décalés par rapport à ceux d'une deuxième planche (4) adjacente à la première. On voit sur cette figure que les tranches des parois (A) de la première planche (3) étant décalées par rapport aux tranches des parois (B) de la deuxième planche (4), il ne reste que quelques points ponctuels (C) de contact entre les deux planches de nida qui pourrait former un chemin de conduction thermique, ce qui réduit considérablement la conductivité thermique a travers la structure sandwich dans son ensemble. Cette amélioration de performances est obtenu sans ajouter des couches, donc à masse et encombrement constants.

La figure 4 montre schématiquement et en perspective, un alvéole de nid d'abeille selon une réalisation avantageuse de l'invention, percé pour en assurer le vidange pendant la mise sous vide du matériau. En effet, lors de la fabrication d'un sandwich tel que décrit ci-dessus par rapport aux figures 2 et 3, la fermeture des alvéoles par collage d'une peau sur les deux faces d'une planche nida pourrait emprisonner de l'air à l'intérieur des alvéoles. Pour éviter que l'air emprisonné éclate les cellules lors de la mise en vide du matériau et assurer le dégazage lors de l'insertion orbitale, quelques trous (v) sont avantageusement percés dans quelques parois (p) latérales de chaque alvéole. Ces trous

Il est à noter également sur cette figure 4, que les alvéoles sont relativement plus larges que hauts, car la diamètre (d) de chaque alvéole est au moins deux fois la hauteur (h), ceci afin assurer un plus grand angle de vue optiques des peaux aluminisées ou dorées en regard et garantir que les rayonnements émis par chaque surface soient absorbées au minimum pas la structure alvéolaire nida qui le plus généralement elle n'est pas réfléchissante.

A titre d'exemple, un modèle selon l'invention pourrait avoir les caractéristiques suivantes :
- Epaisseur des peaux : 0.2 mm
- Conductivité des peaux : 0.2 W/m °C
- Emissivité des peaux : 0.04 (dorage)
- Epaisseur nida : 3 mm (h) pour des mailles de 6 mm (d)
- Epaisseur des parois de nida : 0.01 mm
- Conductivité thermique du nida : 0.1 W/m °C
- Emissivité nida : 0.8.

Dans une version 5 peaux (N+1 = 5) d'épaisseur 0.2 mm avec 4 plaques (N=4) de nida en Nomex ® ECA 6.4-50 d'épaisseur 3 mm (fabricant Euro-composite SA, Echternach, Luxembourg), les peaux étant en verre-époxy polymérisé avec un film de Kapton ® (Dupont Nemours) aluminisé d'épaisseur 25 microns sur chaque surface, et colle en film BSL 312 UL (fabricant Hexcel), les caractéristiques mesurées sur un échantillon du produit décrit ci-dessus sont les suivants :
- Epaisseur total : 13.4mm
- Masse : environ 4 kg/m²
- Flexion 3 points sur éprouvette de 300 x 40 mm, appuis à 260 mm, charge au centre : rigidité en flexion (El) de 3910 daN.cm²/cm de largeur d'éprouvette
- Pouvoir isolant : λz = 4.6 10 ⁻³ W/m/K (-30°C), ε = 0.07 .

Les valeurs mesurées sont proches des simulations faites lors de l'étude théorique de ce matériau.

En outre, ce matériau possède des propriétés qui rendre son utilisation aisé pour la fabrication des structures isolantes pour le domaine spatial . Essais destructeurs mécaniques et essais au vide ont été satisfaisants. Le matériau peut être usiné à la fraise, ou percé avec un outil coupant sans hélice. Des pièces étrangères peuvent être insérées dans le matériau pour permettre sa fixation par exemple. Les bordures peuvent être finies par exemple avec du Kapton ® adhésif.

Un tel matériau présent de nombreux avantages pour l'élaboration des structures légères et rigides présentant des bonnes caractéristiques d'isolation thermique. Par rapport à l'art antérieur où ces deux fonctions étaient assurées séparément, toutes ses caractéristiques sont améliorées. Des variations sur les quelques exemples de réalisations exposés dans la description ci-dessous seront facilement imaginables par l'homme de l'art, sans sortir pour autant du cadre de l'invention, dont les principales caractéristiques figurent dans les revendications qui suivent.

## Revendications

1. Matériau rigide multicouche pour isolation thermique, notamment dans le vide, comprenant au moins une plaque de matériau isolant en nid d'abeille prise « en sandwich » entre deux peaux aluminisées ou dorées d'émissivité faible, ledit matériau nid d'abeille comprend une pluralité d'alvéoles dont le diamètre (d) est d'au moins deux fois plus grand que la hauteur (h), **caractérisé en ce que** les parois latérales desdits alvéoles sont percées latéralement pour en assurer la vidange pendant la mise sous vide dudit matériau.

2. Matériau selon la revendication 1, comprenant une pluralité de N plaques en nid d'abeille prises en sandwich entre au moins deux peaux aluminisées ou dorées.

3. Matériau selon la revendication 2, dans lequel les alvéoles des plaques adjacentes sont décalées latéralement de manière à minimiser les points de contact entre les parois des alvéoles d'une plaque et ceux de la plaque adjacente.

4. Matériau selon l'une des revendications précédentes, **caractérisé en ce que** lesdites peaux aluminisées ou dorées sont réalisées en matériau structural isolant tel que verre-epoxy ou matériau aux propriétés équivalentes,

5. Matériau selon l'une des revendications précédentes, **caractérisé en ce que** ledit matériau nid d'abeille est réalisé dans un matériau très isolant tel que PEI ou NOMEX ® ou matériau aux propriétés équivalentes.

6. Procédé de fabrication d'un matériau rigide multicouche selon l'une des revendications précédentes par collage, dans lequel la colle est déposée uniquement sur les tranches des parois desdits alvéoles, **caractérisé en ce qu'**elle comprend au moins les étapes suivantes :
• Pose d'un film de colle sur la surface de ladite plaque de nid d'abeille ;
• Chauffage dudit film pour crever les alvéoles; ce qui engendrera le rétrécissement de la colle sur la tranche desdits alvéoles ;
• Pressage des panneaux entre eux.

## Claims

1. Multilayer rigid material for thermal insulation, especially in a vacuum, comprising at least one sheet of honeycomb insulating material sandwiched between two aluminized or gold-plated skins of low emissivity, said honeycomb material comprising a plurality of cavities, the diameter (d) of which is at least twice as large as the height (h), **characterized in that** the side walls of said cavities are pierced laterally so as to ensure that said material drains when applying a vacuum.

2. Material according to Claim 1, comprising a plurality of N honeycomb sheets sandwiched between at least two aluminized or gold-plated skins.

3. Material according to Claim 2, in which the cavities in the adjacent sheets are offset laterally so as to minimize the points of contact between the walls of the cavities of one sheet with those of the adjacent sheet.

4. Material according to one of the preceding claims, **characterized in that** said aluminized or gold-plated skins are made of an insulating structural material such as glass-epoxy or a material having equivalent properties.

5. Material according to one of the preceding claims, **characterized in that** said honeycomb material is made of a highly insulating material, such as PEI or NOMEX^{®} or a material having equivalent properties.

6. Process for manufacturing a multilayer rigid material according to one of the preceding claims by adhesive bonding, in which the adhesive is deposited only on the edges of the walls of said cavities, **characterized in that** it comprises at least the following steps:
• a film of adhesive is placed on the surface of said honeycomb sheet;
• said film is heated to puncture the cavities, which will cause the adhesive on the edge of said cavities to shrink; and
• the panels are pressed together.

## Patentansprüche

1. Formstabiles, mehrschichtiges Material zur Wärmeisolierung, insbesondere unter Vakuum, umfassend mindestens eine Platte aus isolierendem Material mit Waffelmuster, die zwischen zwei aluminisierte oder vergoldete Häute mit geringem Emissionsvermögen "eingeschoben" ist, wobei das Material mit Waffelmuster mehrere Wabenzellen umfasst, deren Durchmesser (d) mindestens zwei Mal größer als die Höhe (h) ist, **dadurch gekennzeichnet, dass** die Seitenwände der Wabenzellen seitlich durchdrungen sind, um deren Entleerung des Materials unter Vakuum zu gewährleisten.

2. Material nach Anspruch 1, umfassend mehrere N Platten mit Waffelmuster, die zwischen mindestens zwei aluminisierte oder vergoldete Häute geschoben sind.

3. Material nach Anspruch 2, wobei die Wabenzellen der benachbarten Platten seitlich derart versetzt sind, um die Kontaktpunkte zwischen den Wänden der Wabenzellen einer Platte und denjenigen der benachbarten Platte zu minimieren.

4. Material nach einem der vorhergehenden Ansprüche, **dadurch gekennzeichnet, dass** die aluminisierten oder vergoldeten Häute aus isolierendem Strukturmaterial, wie etwa Epoxidharz, oder einem Material mit entsprechenden Eigenschaften gebildet sind.

5. Material nach einem der vorhergehenden Ansprüche, **dadurch gekennzeichnet, dass** das Material mit Waffelmuster aus einem sehr isolierenden Material, wie etwa PEI oder NOMEX® oder einem Material mit entsprechenden Eigenschaften gebildet ist.

6. Verfahren zur Herstellung eines formstabilen, mehrschichtigen Materials nach einem der vorhergehenden Ansprüche mittels Kleben, wobei der Klebstoff einzig auf die Schnitte der Wände der Wabenzellen aufgetragen wird, **dadurch gekennzeichnet, dass** es mindestens die folgenden Schritte umfasst:
• Legen eines Klebstofffilms auf die Oberfläche der Platte mit Waffelmuster;
• Erwärmen des Films, um die Wabenzellen aufzubrechen; wodurch das Schrumpfen des Klebstoffs auf dem Schnitt der Wabenzellen erzeugt wird;
• Pressen der Tafeln aufeinander.
